# EUROPÄISCHE PATENTSCHRIFT

(11) **EP 1 814 685 B1**
(45) Veröffentlichungstag und Bekanntmachung des Hinweises auf die Patenterteilung: **04.03.2009**
(21) Anmeldenummer: 05773835.3
(22) Anmeldetag: 07.07.2005
(51) Int. Cl.: B23D 51/02, B23D 49/16

(54) **HUBSÄGEMASCHINE**
JIG-SAW MACHINE
MACHINE A SCIER A MOUVEMENT ALTERNATIF

(30) Priorität: 21.09.2004 DE 102004045624
(43) Veröffentlichungstag der Anmeldung: 08.08.2007
(73) Patentinhaber: ROBERT BOSCH GMBH, 70442 Stuttgart (DE)
(72) Erfinder: DELFINI, Stefano, CH-2544 Bettlach (CH); SAEGESSER, Daniel, CH-4900 Langenthal (CH); RUOFF, Thomas, 75236 Kämpfelbach - Bilfingen (DE)
(86) Internationale Anmeldenummer: PCT/EP2005/053256
(87) Internationale Veröffentlichungsnummer: WO 2006/032550

(56) Entgegenhaltungen:
- DE-A1- 3 509 515
- DE-A1- 10 119 561
- US-A- 4 628 605

## Beschreibung

### Stand der Technik

Die Erfindung geht aus von einer Hubsägemaschine nach dem Oberbegriff des Anspruchs 1.

Eine bekannte, handgeführte Stichsäge genannte Handhubsägemaschine (DE 10119 561 A1) weist eine Pendelvorrichtung mit einem am Gehäuse der Stichsäge befestigten U-förmigen Halter und einer zwischen den Halterschenkeln angeordnete Stützrolle auf, die das Sägeblatt an dessen Sägeblattrücken abstützt. Die Stützrolle ist mit einer V-förmigen Nut versehen, in der der Sägeblattrücken aufgenommen ist. Um beim Sägevorgang ein seitliches Auslenken der Pendelvorrichtung quer zur Sägerichtung zu unterdrücken, ist ein Führungsmittel vorgesehen, das am Gehäuse der Stichsäge oder an einer der Auflage der Stichsäge auf dem zu sägenden Werkstück dienenden Fußplatte befestigt ist. Das Führungsmittel ist gabelförmig ausgebildet und trägt an den Gabelenden einander zugekehrte Führungsbacken, die am Halter der Pendelvorrichtung angreifen, und zwar im Bereich des Halters, in dem die Stützrolle angeordnet ist.

Eine bekannte, handgeführte Stichsäge (WO 02/22297 A1) weist eine Stützvorrichtung mit Stützrolle auf, die das Sägeblatt in Sägerichtung an dessen Sägeblattrücken abstützt und bei Bedarf in Sägerichtung pendelnd anzutreiben vermag. Um beim Sägevorgang ein seitliches Auslenken des Sägeblatts quer zur Sägerichtung zu unterbinden, besitzt die Stichsäge eine Führungsvorrichtung zur Führung und seitlichen Abstützung des Sägeblatts, die zwei an den voneinander abgekehrten Blattseiten des Sägeblatts anliegende Führungselemente und einen als Federantrieb ausgebildeten Stellmotor aufweist, mit dem der Abstand zwischen den Führungselementen auf die Sägeblattstärke eingestellt werden kann. Die Führungsvorrichtung ist mit einer das Sägeblatt haltenden Einspann-vorrichtung so gekoppelt, dass die Führungselemente mit Öffnen der Einspannvorrichtung von dem Sägeblatt abheben und mit Schließen der Einspannvorrichtung an die Blattseiten des Sägeblatts angelegt werden. Die Führungselemente sind als Wälzkörper oder Keramikteile ausgebildet, von denen jeweils einer an dem Hebelarm eines zweiarmigen Schwenkhebels angeordnet ist. Die zangenschenkelartig ausgebildeten Schwenkhebel sind über ein Gelenk verbunden und greifen mit Führungsbolzen, die an ihren von den Führungs-elementen abgekehrten Hebelarmen abstehen, in Nuten eines Lagerbauteils ein, die in Längsrichtung des Sägeblatts leicht schräg unter einem Winkel kleiner 6° auseinanderlaufend ausgeführt sind. Beim Verschieben des Lagerbauteils werden die Schwenkhebel über die Nutflanken und die Führungsbolzen geschwenkt. Am Lagerbauteil greifen zwei Druckfedern an, die das Lagerbauteil in Längsrichtung des Sägeblattes belasten und über die Nuten und Führungsbolzen die Schwenkhebel so zu verstellen suchen, dass sich die Führungselemente auf den Schwenkhebeln mit Federvorspannung an die Blattseiten des Sägeblatts anlegen.

Bei einer bekannten Stichsäge (DE 35 09 515 A1, Fig. 19 bis 23) ist die Führungsvorrichtung zum Führen und Abstützen des Sägeblatts quer zur Sägerrichtung in dem die Stützrolle für den Sägeblattrücken tragenden Halter integriert, und die Führungselemente sind mit der Stützrolle zusammengefasst. Die Stützrolle weist hierzu eine tiefe Umfangsnut auf, deren Nutflanken an den seitlichen Flanken des Sägeblatts anliegen. Die Stützrolle ist in ihrer axialen Mittelebene geteilt; und die beiden Rollenhälften arbeiten verstellbar gegen das Sägeblatt. Hierzu sind die Rollenhälften in einer federnden Aufhängung gelagert, und zwischen jeder Rollhälfte und dem Tragarm ist eine Tellerfeder angeordnet, die eine selbsttätige Anpassung des Abstands der Rollenhälften voneinander an die Sägeblattdicke vornimmt.

Bei einer ebenfalls bekannten Stichsäge (US 4 628 605) ist die Führungsvorrichtung für das seitliche Führen des Sägeblatts ebenfalls in dem die Stützrolle für den Sägeblattrücken aufnehmenden Halter integriert. Die Führungselemente bestehen aus zwei Walzen, die am Halter um parallel zum Sägeblatt ausgerichtete Achsen drehbar sind und sich mit ihrem Walzenumfang an jeweils eine der beiden Blattseiten oder Wangen des Sägeblatts anlegen.

### Vorteile der Erfindung

Die erfindungsgemäße Handhubsägemaschine mit den Merkmalen des Anspruchs 1 hat den Vorteil, dass durch die Zusammenlegung von Stützvorrichtung und Führungsvorrichtung für das Sägeblatt und der konstruktiven Ausführung des Verschiebegliedes zur manuellen Einstellung des Axialabstandes zwischen den das Sägeblatt führenden Führungsscheiben eine konstruktive Vereinfachung der Handhubsägemaschine erreicht wird, ohne dass die Qualität der für ein gutes Sägeergebnis erforderlichen Abstützung des Sägeblatts in Sägerichtung und quer zur Sägerichtung beeinträchtigt wird. Alle Sägeblätter werden dabei unabhängig von ihrer Sägeblattstärke gleich gut quer zur Sägerichtung geführt. Für Stütz- und Führungsvorrichtung sind wesentlich weniger Bauteile erforderlich, was sowohl in der Fertigung als auch bei der Montage zu Kosteneinsparungen führt.

Durch die in den weiteren Ansprüchen aufgeführten Maßnahmen sind vorteilhafte Weiterbildungen und Verbesserungen der im Anspruch 1 angegebenen Handhubsägemaschine möglich.

Gemäß einer vorteilhaften Ausführungsform der Erfindung ist die eine Führungsscheibe einstückig mit der Stützrolle ausgeführt und die andere Führungsscheibe auf der Stützrolle axial verschieblich angeordnet.

### Zeichnung

Die Erfindung ist anhand eines in der Zeichnung dargestellten Ausführungsbeispiels im folgenden näher beschrieben. Es zeigen:
Fig. 1 eine perspektivische Ansicht einer Handhubsägemaschine in schematisierter Darstellung ,
Fig. 2 eine vergrößerte Darstellung einer Stütz- und Führungsvorrichtung für das Sägeblatt in der Handhubsägemaschine in Fig. 1,
Fig. 3 eine Vorderansicht der Stütz- und Führungsvorrichtung in Richtung Pfeil III in Fig. 2,
Fig. 4 eine Explosionsdarstellung der Stütz- und Führungsvorrichtung in Fig. 1 und 2,
Fig. 5 ausschnittweise eine vergrößerte Schnittdarstellung der Stütz- und Führungsvorrichtung in Fig. 3.

### Beschreibung des Ausführungsbeispiels

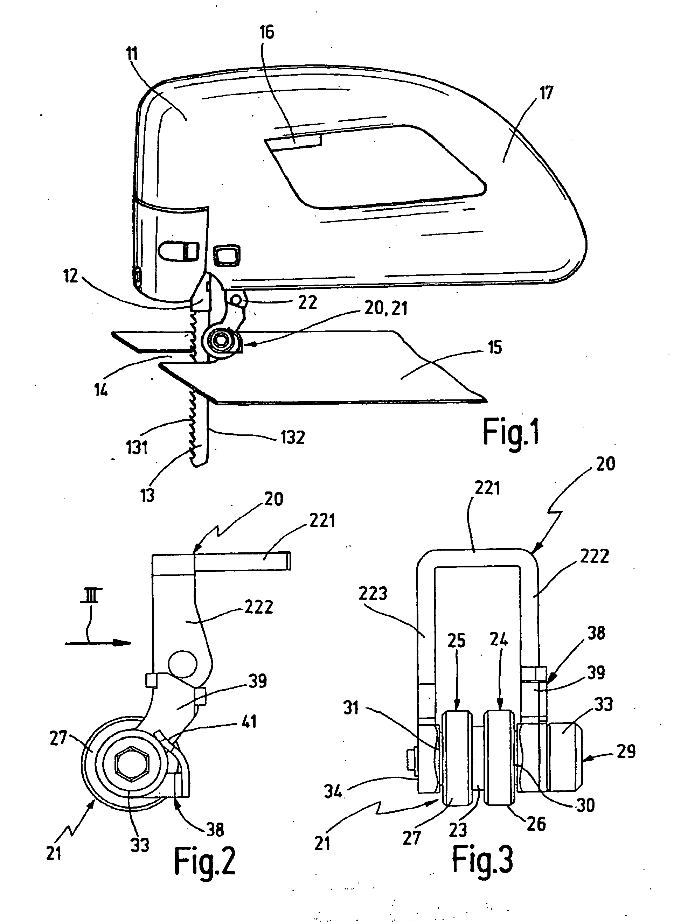

Die in Fig. 1 schematisiert dargestellte Handhubsägemaschine oder handgeführte Stichsäge weist ein Maschinengehäuse 11 auf, in dem ein Elektromotor mit einem Getriebe zum Antrieb einer Hubstange 12 zu einer auf- und abwärts gerichteten Hubbewegung angeordnet ist. An der Hubstange 12 ist ein Sägeblatt 13 mit seinem Einspannschaft lösbar, aber unverlierbar gekoppelt. Das Sägeblatt 13, das eine Sägezahnleiste 131 und einen von dieser abgekehrten Sägeblattrücken 132 aufweist, ist durch eine Durchtrittsöffnung 14 in einer Fußplatte 15 hindurchgeführt, die am Maschinegehäuse 11 festgelegt ist und bei Gebrauch der Handhubsägemaschine auf das zu sägende Werkstück aufgesetzt wird. Der Elektromotor der Handhubsägemaschine wird mittels einer Drucktaste 16 ein- bzw. ausgeschaltet, die an der Unterseite eines im Maschinengehäuse 11 ausgeformten Handgriffs 17 angeordnet ist.

Um ein Auslenken des freien Endes des Sägeblatts 13 beim Sägen und eine damit einhergehende mangelnde Qualität des Schnittergebnisses zu vermeiden, ist einerseits eine Stützvorrichtung 20, die das Sägeblatt 13 in Sägerichtung abstützt, und andererseits eine Führungsvorrichtung 21 vorgesehen, die das Sägeblatt 13 quer zur Sägerichtung abstützt und führt. Stütz- und Führungsvorrichtung 20, 21 sind ineinander integriert, so dass Bauelemente der einen Vorrichtung zugleich Funktionen in der anderen Vorrichtung übernehmen. Dabei umfasst die Stützvorrichtung 20 einen U-förmigen Halter 22 mit zwei über ein Querteil 221 miteinander verbundenen Schenkeln 222, 223, zwischen deren Schenkelenden eine Stützrolle 23 angeordnet ist, die das Sägeblatt 13 über dessen Sägeblattrücken 132 abstützt. Der Halter 22 ist in Sägerichtung hinter dem Sägeblatt 13 in das Maschinengehäuse 11 geführt und dort mit seinem Querteil 221 festgelegt. Die Führungsvorrichtung 21 weist zwei Führungselemente 24, 25 auf, die auf voneinander abgekehrten Seiten des Sägeblatts 13 liegen und das Sägeblatt 13 zwischen sich aufnehmen. Der Axialabstand der Führungselemente 24, 25 voneinander ist einstellbar, so dass Sägeblätter 13 mit unterschiedlicher Blattstärke oder Blattdicke zwischen den Führungselementen 24, 25 verschleißfrei geführt werden.

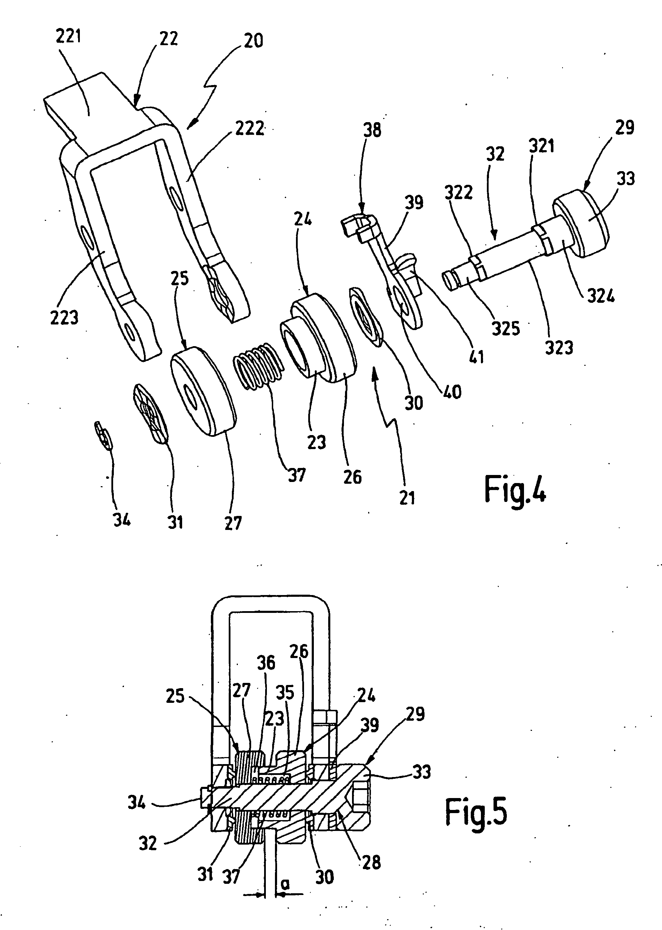

Die Führungselemente 24, 25 sind als Führungsscheiben 26, 27 mit einem gegenüber dem Außendurchmesser der Stützrolle 23 größeren Außendurchmesser ausgebildet und schließen die Stützrolle 23 zwischen sich ein. Die Führungsscheibe 26 ist dabei einstückig mit der Stützrolle 23 ausgeführt, und die Führungsscheibe 27 ist verschieblich auf der Stützrolle 23 angeordnet. Zur Veränderung des Axialabstands zwischen den Führungsscheiben 26, 27 weist die Führungsvorrichtung 21 ein Verschiebeglied zur axialen Verschiebung der Führungsscheiben 26, 27 auf, das zur Einstellung eines gewünschten Axialabstands mit einem manuellen Betätigungsglied 29 gekoppelt ist. Das Verschiebeglied 28 umfasst zwei Verstellscheiben 30, 31, von denen die Verstellscheibe 30 zwischen der Führungsscheibe 26 und dem Schenkel 222 des Halters 22 und die Verstellscheibe 31 zwischen der Führungsscheibe 27 und dem Schenkel 223 des Halters 22 angeordnet ist. Die beiden Verstellscheiben 30, 31 sind auf ihrer den Schenkeln 222, 223 zugekehrten Seite profiliert und weisen hierdurch eine über den Umfang variierende, axiale Dicke oder Stärke auf. Eine gleiche Profilierung besitzen die Schenkel 222, 223 auf ihrer den Verstellscheiben 30, 31 zugekehrten Seite, so dass bei Verdrehen der Verstellscheiben 30, 31 relativ zu den Schenkeln 222, 223 die Verstellscheiben 30, 31 sich axial zueinander verschieben. Die Verstellscheiben 30, 31 sind drehfest auf einer in den Schenkeln 222, 223 gelagerten Welle 32 befestigt, während die Führungsscheiben 26, 27 und Stützrolle 23 drehbeweglich auf der Welle 32 sitzen. Am einen Ende der Welle 32 ist das Betätigungsglied 29 in Form eines Drehknopfes 33 drehfest mit der Welle 32 verbunden, und am anderen Ende der Welle 32 ist ein Sicherungsring 34 aufgeschoben, der ein Ausziehen der Welle 32 aus den Schenkeln 222, 223 verhindert. Wie insbesondere aus Fig. 5 zu erkennen ist, ist in die Stützrolle 23 eine koaxiale, zylindrische Aussparung 35 eingebracht, die bis in die mit der Stützrolle 23 einstückig ausgeführte Führungsscheibe 26 hineinragt. Die Führungsscheibe 27 weist ebenfalls eine zentrale, zylindrische Ausnehmung 36 auf, die von der der Stützrolle 23 zugekehrten Seite der Führungsscheibe 27 aus eingebracht ist und deren Innendurchmesser wenig größer bemessen ist als der Außendurchmesser der Stützrolle 23, so dass die Führungsscheibe 26 die Stützrolle 23 mit geringem Spiel zu übergreifen vermag. Eine auf die Welle 32 aufgeschobene Druckfeder 37 stützt sich an den Böden der Ausnehmungen 35, 36 ab und presst die Führungsscheibe 26 gegen die Verstellscheibe 30 und diese gegen den Schenkel 222 sowie die Führungsscheibe 27 gegen die Verstellscheibe 31 und diese gegen den Schenkel 223.

Die beschriebenen Bauelemente sind in Fig. 4 in Explosionsdarstellung und in Fig. 2, 3 und 5 im Zusammenbau dargestellt. Zur drehfesten Verbindung der Verstellscheiben 30, 31 mit der Welle 32 besitzen die Verstellscheiben 30, 31 eine rechteckförmige zentrale Ausnehmung, mit denen sie auf Abschnitte 321 und 322 der Welle 32 aufgeschoben sind, die jeweils einen entsprechenden rechteckförmigen Querschnitt aufweisen (Fig. 4). Der zwischen diesen beiden Abschnitten 321 und 322 sich erstreckende Abschnitt 323 der Welle 32 ist zur Aufnahme der Führungsscheiben 26, 27 und Stützrolle 23 zylindrisch. Ebenfalls zylindrisch sind die an den Abschnitten 321 und 322 sich fortsetzenden Abschnitte 324 und 325 der Welle 32, mit denen die Welle 32 in den Schenkeln 222, 223 des Halters 22 gelagert ist.

Wird der Drehknopf 33 gedreht, so werden über die Welle 32 die an die feststehenden Schenkel 222, 223 des Halters 22 angedrückten Verstellscheiben 30, 31 gedreht. Je nach Drehrichtung vergrößerte oder verkleinert sich infolge der zu- oder abnehmenden Dicke der Verstellscheiben 30, 31 der Abstand der Führungsscheiben 26, 27 von dem zugeordneten Schenkel 222 bzw. 223, so dass sich die Führungsscheibe 27 mehr oder weniger weit auf die Stützrolle 23 aufschiebt und dadurch der Axialabstand a zwischen den einander zugekehrten Stirnflächen der Führungsscheiben 26 kleiner oder größer wird und somit auf die jeweilige Blattstärke des zu führenden Sägeblatts eingestellt werden kann. Dadurch, dass - wie beschrieben - zwei gleich ausgebildete Verstellscheiben 30, 31 spiegelsymmetrisch angeordnet sind, bleibt stets die mittige Lage des Führungsspalts zwischen den Führungsscheiben 26, 27 für das Sägeblatt 13 erhalten. Der so eingestellte Axialabstand a zwischen den Führungsscheiben 26, 27 wird durch die Haftreibung zwischen den Bauteilen der Führungsvorrichtung 21 gehalten.

Vorteilhaft ist ein zusätzliches Arretierglied 38 vorgesehen, das die Welle 32 in ihrer jeweiligen Drehposition kraft- und/oder formschlüssig festlegt. Das in Fig. 4 zu sehende Arretierglied 38 weist einen Haltearm 39 auf, der mit einer Öffnung 40 auf die Welle 32 so aufgeschoben ist, dass er zwischen dem Drehknopf 33 und dem Schenkel 222 einliegt. Am freien Ende ist der Haltearm 39 am Schenkel 222 befestigt. Der Haltearm 39 trägt einen axial abstehenden Klemmbügel 41, der sich kraftschlüssig auf den Drehknopf 33 aufpresst. Alternativ kann das Arretierglied 38 als Rückhalteblech mit einer Arretiernase ausgebildet und der Drehknopf 33 mit einer Riffelung versehen werden, in die die Arretiernase einfällt. Durch Schwenken des Rückhalteblechs kann die Arretiernase wieder aus der Riffelung ausgehoben werden.

## Patentansprüche

1. Handhubsägemaschine mit einem Maschinengehäuse (11), mit einem motorisch zu einer Hubbewegung antreibbaren Sägeblatt (13), das eine Sägezahnleiste (131) und einen davon abgekehrten Sägeblattrücken (132) aufweist, mit einer Stützvorrichtung (20), die eine das Sägeblatt (13) an dessen Sägeblattrücken (132) abstützende Stützrolle (23) und einen am Gehäuse (11) festgelegten, die Stützrolle (23) zwischen zwei Schenkeln (222, 223) tragenden Halter (22) aufweist, und mit einer im Halter (22) der Stützvorrichtung (20) integrierten Führungsvorrichtung (21) zum Führen und Abstützen des Sägeblatts (13) quer zur Sägerichtung, die auf voneinander abgekehrten Seiten des Sägeblatts (13) mit einstellbarem Abstand voneinander liegende, die Stützrolle (23) zwischen sich einschließende Führungselemente (24, 25), die als Führungsscheiben (26, 27) mit einem gegenüber dem Außendurchmesser der Stützrolle (23) größeren Außendurchmesser ausgebildet sind, und ein Verschiebeglied (28) zur axialen Verschiebung der Führungsscheiben (26, 27) aufweist, das mit einem manuellen Betätigungsglied (29) gekoppelt ist, **dadurch gekennzeichnet, dass** das Verschiebeglied (28) zwei gleiche Verstellscheiben (30,31) aufweist, deren axiale Breite über den Umfang variiert, dass jeweils eine Verstellscheibe (30, 31) zwischen einer Führungsscheibe (26, 27) und einem Schenkel (222, 223) des Halters (22) angeordnet ist und dass im Innern der Stützrolle (23) eine Druckfeder (37) einliegt, die sich an den beiden Führungsscheiben (26, 27) abstützt und diese an die Verstellscheiben (30, 31) andrückt.

2. Handhubsägemaschine nach Anspruch 1, **dadurch gekennzeichnet, dass** die eine Führungsscheibe (26) einstückig mit der Stützrolle (23) ausgebildet ist und die andere Führungsscheibe (27) auf der Stützrolle (23) axial verschieblich angeordnet ist.

3. Handhubsägemaschine nach Anspruch 1 oder 2, **dadurch gekennzeichnet, dass** Stützrolle (23) und Führungsscheiben (26, 27) auf einer in den Schenkeln (222, 223) des Halters (22) drehbar aufgenommenen Welle (32) sitzen und dass auf der Welle (32) die Verstellscheiben (30, 31) und das Betätigungsglied (29) drehfest angeordnet sind.

4. Handhubsägemaschine nach einem der Ansprüche 1 bis 3, **dadurch gekennzeichnet, dass** das Betätigungsglied (29) als Drehknopf (33) ausgebildet ist.

5. Handhubsägemaschine nach einem der Ansprüche 1 bis 4, **dadurch gekennzeichnet, dass** die Führungsvorrichtung (21) ein Arretierglied (38) zur Festlegung der Welle (32) in ihrer jeweiligen Drehposition aufweist.

## Claims

1. Portable jigsaw machine comprising a machine housing (11), comprising a saw blade (13) which can be driven with a reciprocating movement in a motor-operated manner and has a saw tooth strip (131) and a saw blade back (132) facing away therefrom, comprising a supporting device (20) which has a supporting roller (23), supporting the saw blade (13) at its saw blade back (132), and a holder (22) secured to the housing (11) and carrying the supporting roller (23) between two legs (222, 223), and comprising a guide device (21), integrated in the holder (22) of the supporting device (20), for guiding and supporting the saw blade (13) transversely to the sawing direction, which guide device (21) has guide elements (24, 25), which are at an adjustable distance from one another on sides of the saw blade (13) facing away from one another, enclose the supporting roller (23) between them and are designed as guide discs (26, 27) having an outside diameter larger than the outside diameter of the supporting roller (23), and a displacement member (28) for the axial displacement of the guide discs (26, 27), which displacement member (28) is coupled to a manual actuating member (29), **characterized in that** the displacement member (28) has two identical adjusting discs (30, 31), the axial width of which varies over the circumference, **in that** a respective adjusting disc (30, 31) is arranged between a guide disc (26, 27) and a leg (222, 223) of the holder (22), and **in that** a compression spring (37) rests in place in the interior of the supporting roller (23), said compression spring (37) being supported against the two guide discs (26, 27) and pressing the latter against the adjusting discs (30, 31).

2. Portable jigsaw machine according to Claim 1, **characterized in that** the one guide disc (26) is formed in one piece with the supporting roller (23) and the other guide disc (27) is arranged on the supporting roller (23) in an axially displaceable manner.

3. Portable jigsaw machine according to Claim 1 or 2, **characterized in that** the supporting roller (23) and the guide discs (26, 27) sit on a shaft (32) rotatably accommodated in the legs (222, 223) of the holder (22), and **in that** the adjusting discs (30, 31) and the actuating member (29) are arranged on the shaft (32) in a rotationally fixed manner.

4. Portable jigsaw machine according to one of Claims 1 to 3, **characterized in that** the actuating member (29) is designed as a rotary knob (33).

5. Portable jigsaw machine according to one of Claims 1 to 4, **characterized in that** the guide device (21) has a locking member (38) for securing the shaft (32) in its respective rotary position.

## Revendications

1. Scie à mouvement alternatif manuelle comprenant un bâti de machine (11), avec une lame de scie (13) pouvant être entraînée en mouvement alternatif par un moteur, qui présente un bord en dents de scie (131) et un dos de lame de scie (132) opposé, avec un dispositif de support (20) qui présente un rouleau de support (23) supportant la lame de scie (13) au niveau de son dos de lame de scie (132) et une fixation (22) fixée sur le boîtier (11), qui porte le rouleau de support (23) entre deux branches (222, 223), et avec un dispositif de guidage (21) intégré dans la fixation (22) du dispositif de support (20), pour le guidage et le support de la lame de scie (13) transversalement à la direction de sciage, qui présente sur des côtés de la lame de scie (13) opposés l'un à l'autre, des éléments de guidage (24, 25) espacés l'un de l'autre d'une distance ajustable, enfermant entre eux le rouleau de support (23), qui sont réalisés sous forme de disques de guidage (26, 27) avec un diamètre extérieur plus grand par rapport au diamètre extérieur du rouleau de support (23), et un organe déplaçable (28) pour le déplacement axial des disques de guidage (26, 27), qui est accouplé à un organe d'actionnement manuel (29), **caractérisée en ce que** l'organe déplaçable (28) présente deux disques de réglage identiques (30, 31) dont la largeur axiale varie sur la périphérie, **en ce qu'**un disque de réglage respectif (30, 31) est disposé entre un disque de guidage (26, 27) et une branche (222, 223) de la fixation (22), et **en ce qu'**un ressort de pression (37) est inséré à l'intérieur du rouleau de support (23), s'appuie contre les deux disques de guidage (26, 27) et les presse contre les disques de réglage (30, 31).

2. Scie à mouvement alternatif manuelle selon la revendication 1, **caractérisée en ce que** l'un des disques de guidage (26) est réalisé d'une seule pièce avec le rouleau de support (23) et l'autre disque de guidage (27) est disposé de manière déplaçable axialement sur le rouleau de support (23).

3. Scie à mouvement alternatif manuelle selon la revendication 1 ou 2, **caractérisée en ce que** le rouleau de support (23) et les disques de guidage (26, 27) reposent sur un arbre (32) reçu à rotation dans les branches (222, 223) de la fixation (22), et **en ce que** les disques de réglage (30, 31) et l'organe d'actionnement (29) sont disposés de manière solidaire en rotation sur l'arbre (32).

4. Scie à mouvement alternatif manuelle selon l'une quelconque des revendications 1 à 3, **caractérisée en ce que** l'organe d'actionnement (29) est réalisé sous forme de bouton tournant (33).

5. Scie à mouvement alternatif manuelle selon l'une quelconque des revendications 1 à 4, **caractérisée en ce que** le dispositif de guidage (21) présente un organe de blocage (38) pour fixer l'arbre (32) dans sa position rotative respective.
